# EUROPEAN PATENT SPECIFICATION

(11) **EP 3 525 123 B1**
(45) Date of publication and mention of the grant of the patent: **08.09.2021**
(21) Application number: 19156922.7
(22) Date of filing: 13.02.2019
(51) Int. Cl.: G06F 21/32, G06F 21/81

(54) **METHOD AND APPARATUS FOR FINGERPRINT UNLOCKING**
VERFAHREN UND VORRICHTUNG ZUR FINGERABDRUCKENTSPERRUNG
PROCÉDÉ ET APPAREIL DE DÉVERROUILLAGE D'EMPREINTES DIGITALES

(30) Priority: 13.02.2018 CN 201810150531
(43) Date of publication of application: 14.08.2019
(73) Proprietor: Beijing Xiaomi Mobile Software Co., Ltd., Beijing 100085 (CN)
(72) Inventor: JIANG, Zhongsheng, Beijing, 100085 (CN)
(74) Representative: Hughes, Andrea Michelle

(56) References cited:
- EP-A1- 3 211 514
- EP-A1- 3 252 644
- US-A1- 2011 080 350
- US-A1- 2014 198 960
- US-A1- 2017 220 842
- US-A1- 2017 316 250

## Description

### TECHNICAL FIELD

The present disclosure relates to the technical field of fingerprint recognition, and in particular, relates to a method and apparatus for fingerprint unlocking.

### BACKGROUND

With the continuous development of terminal technologies, the security of terminals is also constantly improving. For example, in order to protect user privacy properly, a terminal provides a password protection function, and the terminal is unlocked when the password entered by a user is detected to match an unlock password.

In the related art, the password protection function provided by the terminal supports biometric-based passwords such as fingerprint passwords, face passwords, and the like. Taking the password protection function provided by the terminal supporting the fingerprint password as an example, the terminal scans user fingerprint information through a fingerprint sensor, and matches the scanned user fingerprint information with pre-stored fingerprint information. If the matching is successful, the terminal is unlocked, and if the matching is unsuccessful, the terminal prompts password input error. Fingerprint recognition is disclosed in US 2017/0220842, EP 3211514, EP 3252644, US2014/198960 and US2017/0316250.

### SUMMARY

The embodiments of the present disclosure provide a method and apparatus for fingerprint unlocking to avoid power consumption caused by waking up the system due to an unintended touch.

According to a first aspect of the embodiments of the present disclosure, there is provided a method for fingerprint unlocking as defined by claim 1.

According to a second aspect of the embodiments of the present disclosure, there is provided an electronic device as defined by claim 4.

According to a third aspect of the embodiments of the present disclosure, there is provided a computer-readable storage medium as defined by claim 7.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is an application scenario diagram of a method for fingerprint unlocking according to an exemplary embodiment.
Fig. 2 is a flow chart of a method for fingerprint unlocking according to an exemplary embodiment.
Fig. 3 is a flow chart of a method for fingerprint unlocking according to another exemplary embodiment.
Fig. 4 is a flow chart of a method for fingerprint unlocking according to another exemplary embodiment.
Fig. 5 is a flow chart of a method for fingerprint unlocking according to another exemplary embodiment.
Fig. 6A is a block diagram of an apparatus for fingerprint unlocking according to an exemplary embodiment.
Fig. 6B is a block diagram of an apparatus for fingerprint unlocking according to another exemplary embodiment.
Fig. 6C is a block diagram of an apparatus for fingerprint unlocking according to another exemplary embodiment.
Fig. 6D is a block diagram of an apparatus for fingerprint unlocking according to another exemplary embodiment.
Fig. 6E is a block diagram of an apparatus for fingerprint unlocking according to another exemplary embodiment.
Fig. 6F is a block diagram of an apparatus for fingerprint unlocking according to another exemplary embodiment.
Fig. 7 is a block diagram of an apparatus for fingerprint unlocking according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

In the related art, the on-screen fingerprint recognition technology may detect whether a finger-like object, including a finger and an object similar to the finger that may be detected by a touch screen, contacts the touch screen through the touch screen, and when it is detected that a contact position of the finger-like object and the touch screen is located in the fingerprint sensing area, the operating system of the electronic device is woken up (for example, the screen is lightened). After waking up the operating system of the electronic device, the pressure sensor may be activated to perform pressure detection, and when the electronic device determines that the pressure parameter detected by the pressure sensor meets the preset condition, the fingerprint sensor is activated to perform fingerprint detection, and then the electronic device performs fingerprint matching based on the fingerprint information detected by the fingerprint sensor, and determines whether to unlock the electronic device according to the result of the fingerprint matching. When the operating system of the electronic device is woken up, the pressure sensor is also activated, and if the electronic device determines that the pressure parameter detected by the pressure sensor does not meet the preset condition, it is determined that the user does not intend to unlock the electronic device and the fingerprint sensor is not activated. In this way, the power consumption of waking up the system and activating the pressure sensor is wasted. Therefore, the above-mentioned fingerprint unlocking method may cause the waste of power consumption.

Moreover, the unlocking time is relatively long during the above-mentioned unlocking process.

In order to solve the above technical problems, embodiments of the present disclosure provide a method and apparatus for fingerprint unlocking, so as to avoid wasting power consumption and to shorten the time of fingerprint unlocking.

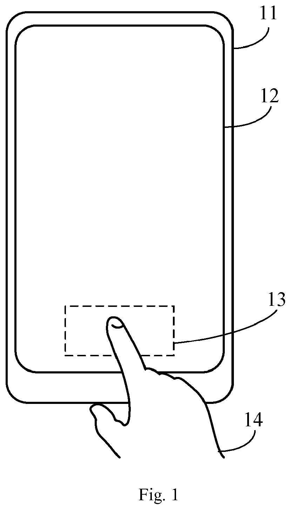

Fig. 1 is an application scenario diagram of a method for fingerprint unlocking according to an exemplary embodiment. The method for fingerprint unlocking may be applied to an electronic device 11, and the electronic device 11 may be an electronic device with a fingerprint recognition function, such as a smart phone, a tablet computer, a PDA (Personal Digital Assistant), an e-reader, a multimedia player, etc. The electronic device 11 is equipped with a touch screen 12 and a fingerprint sensor (not shown), and the electronic device 11 is capable of detecting a pressure value applied on the touch screen 12 by an object and a contact position of the object with the touch screen 12. The fingerprint sensor is disposed in the touch screen 12 and forms a fingerprint response area 13 at a corresponding position of the touch screen 12. The fingerprint sensor may be a fingerprint sensor, an optical fingerprint sensor, an ultrasonic fingerprint sensor, or the like. When a finger 14 contacts the fingerprint response area 13, the fingerprint sensor may collect fingerprint information of the finger 14 for unlocking the electronic device.

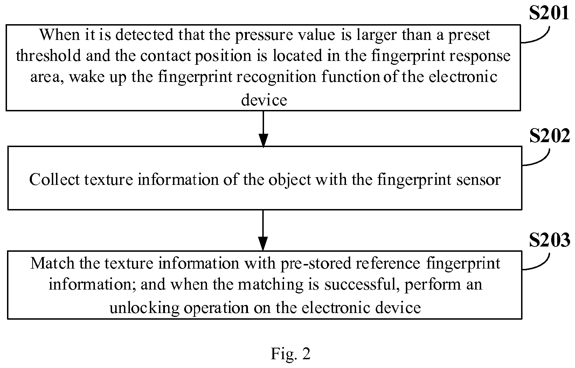

Fig. 2 is a flow chart of a method for fingerprint unlocking according to an exemplary embodiment. As shown in Fig. 2, the method for fingerprint unlocking includes the following steps S201 to S203.

In step S201, when it is detected that the pressure value is larger than a preset threshold and the contact position is located in the fingerprint response area, the fingerprint recognition function of the electronic device is woken up.

In an embodiment, when the electronic device is in a sleep state, or when the touch screen is in a screen-off state, it may be firstly detected in real time whether the pressure value applied on the touch screen by the object is larger than a preset threshold, and when the pressure value applied on the touch screen by the object is larger than the preset threshold, it is detected whether the contact position of the object and the touch screen is located in the fingerprint response area. When the contact position of the object with the touch screen is detected to be located in the fingerprint response area, the fingerprint recognition function of the electronic device is woken up.

In another embodiment, when the electronic device is in the sleep state, or when the touch screen is in the off-screen state, it may be firstly detected in real time whether the contact position of the object and the touch screen is located in the fingerprint response area, when the contact position of the object and the touch screen is detected to be in the fingerprint response area, it is detected whether the pressure value applied on the touch screen by the object is larger than the preset threshold, and when the pressure value applied on the touch screen by the object is larger than the preset threshold, the fingerprint recognition function of the electronic device is woken up.

In another embodiment, when the electronic device is in the sleep state, or when the touch screen is in the off-screen state, it may be detected in parallel whether the pressure value applied on the touch screen by the object is larger than the preset threshold and whether the contact position of the object with the touch screen is located in the fingerprint response area, and when it is detected that the pressure value applied on the touch screen by the object is larger than the preset threshold and the contact position of the object with the touch screen is located in the fingerprint response area, the fingerprint recognition function of the electronic device is woken up.

In an embodiment, waking up the fingerprint recognition function of the electronic device may be implemented by the following two ways: (1) waking up firstly the operating system of the electronic device, and then activating the fingerprint sensor through the operating system; (2) transmitting a wake-up instruction (such as a hardware interrupt) through the pressure sensor or the touch sensor to wake up the fingerprint sensor. This wake-up manner has a short response time and may reduce the time delay of the fingerprint unlocking.

In step S202, texture information of the object is collected by the fingerprint sensor.

In the present embodiment, after the fingerprint recognition function of the electronic device is woken up, the fingerprint sensor is activated to collect the texture information of the object. If the object is the finger of a user, the texture information is the fingerprint information.

In step S203, a matching is performed based on the texture information with pre-stored reference fingerprint information; and when the matching is successful, an unlocking operation is performed on the electronic device.

In the present embodiment, the electronic device matches the collected texture information with the pre-stored reference fingerprint information, and performs the unlocking operation on the electronic device when the matching is successful.

In the present embodiment, before collecting the texture information of the object by the fingerprint sensor, only when it is detected that the pressure value applied on the touch screen by the object is larger than the preset threshold and the contact position of the object and the touch screen is located in the fingerprint response area, the finger recognition function of the electronic device is woken up. In this way, the following two situations can be avoided: 1. the fingerprint recognition function is woken up when the pressure value applied on the touch screen by the object is larger than the preset threshold, but the touch position is not in the fingerprint response area, and it is unnecessary to activate the finger sensor to collect the texture information to unlock the electronic device; 2. the fingerprint recognition function is woken up when the touch position is located in the fingerprint response area, but the pressure value applied on the touch screen by the object is less than or equal to the preset threshold, and it is unnecessary to activate the fingerprint sensor to collect the texture information of the object to unlock the electronic device. Therefore, the technical solutions provided by the embodiments of the present disclosure can effectively avoid power consumption caused by waking up the fingerprint recognition function by the unintended touch.

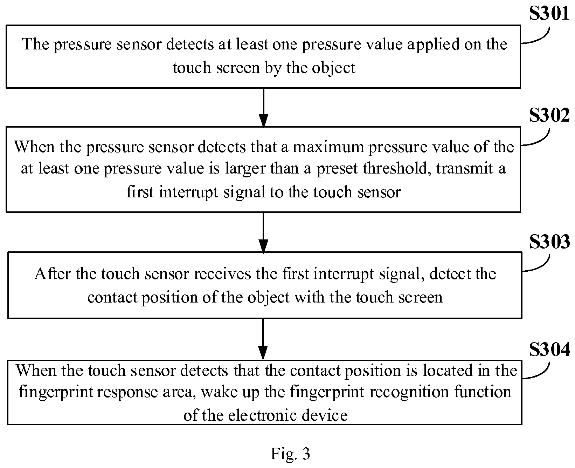

Fig. 3 is a flow chart of a method for fingerprint unlocking according to another exemplary embodiment. In the present embodiment, the touch screen includes a touch sensor for detecting a contact position of the object on the touch screen, and the electronic device further includes a pressure sensor for detecting a pressure value applied on the touch screen by the object. Based on the embodiment shown in Fig. 2, the above step S201 includes the following steps S301 to S304.

In step S301, the pressure sensor detects at least one pressure value applied on the touch screen by the object.

In an embodiment, a pressure sensing range of the pressure sensor may cover the fingerprint response area without covering the entire touch screen. In the present embodiment, the pressure sensor may be located near the fingerprint response area, but is not limited thereto. In another embodiment, the pressure sensing range of the pressure sensor may also cover the entire touch screen.

In an embodiment, the pressure sensor may be a separate sensor, which may be located above the glass cover in the touch screen module (a front surface of the electronic device) or under the touch screen module. In another embodiment, the pressure sensor may also be integrated into the touch screen module.

In an embodiment, the touch screen may be a touch screen with a single point touch function that may detect one pressure value applied on the touch screen by the object. In another embodiment, the touch screen may be a touch screen with a multi-point touch function that may detect two or more pressure values applied on the touch screen by the objects.

In an embodiment, before step S301, the method may further include the following steps: when it is detected that the touch screen is in a screen-off state or the electronic device is in a sleep state, activating the pressure sensor. That is, when the touch screen is in the off state or the electronic device is in the sleep state, the pressure sensor may be activated firstly to detect the pressure value applied on the touch screen by the object in real time. For example, the pressure sensor continuously detects the pressure values applied on the touch screen by the object at a preset operating frequency. In order to reduce power consumption, the pressure sensor may operate at a relatively low operating frequency.

In step S302, when the pressure sensor detects that a maximum pressure value of the at least one pressure value is larger than the preset threshold, transmitting a first interrupt signal to the touch sensor.

In the present embodiment, when the pressure sensor detects that the maximum pressure value of the at least one pressure value applied on the touch screen by the object is larger than the preset threshold, the first interrupt signal is transmitted to the touch sensor, and the first interrupt signal is configured to trigger the touch sensor to work. The time of activating the touch sensor by the pressure sensor through the hardware interrupt is generally less than the time of activating the touch sensor by the operating system, so that the unlocking delay can be reduced.

In step S303, after receiving the first interrupt signal, the touch sensor detects the contact position of the object with the touch screen.

In step S304, when the touch sensor detects that the contact position is located in the fingerprint response area, the fingerprint recognition function of the electronic device is woken up.

In the present embodiment, the touch sensor may cover the entire touch screen for detecting the contact position of the object with the touch screen. After receiving the first interrupt signal, the touch sensor may start working to detect the contact position of the object with the touch screen, and when it is detected that the contact position is located in the fingerprint response area, the fingerprint recognition function of the electronic device is woken up.

In the present embodiment, when the touch screen is in the off state or the electronic device is in the sleep state, the pressure sensor is activated firstly to detect at least one pressure value applied on the touch screen by the object, and when a maximum pressure value of the at least one pressure value is larger than the preset threshold, the first interrupt signal is transmited to the touch sensor to activate the touch sensor to detect the contact position of the object with the touch screen. When the contact position is located in the fingerprint response area, the touch sensor wakes up the fingerprint recognition function of the electronic device. Since the time of activating the touch sensor by the pressure sensor through the hardware interrupt is generally less than the time of activating the touch sensor by the operating system, the fingerprint unlocking delay can be reduced.

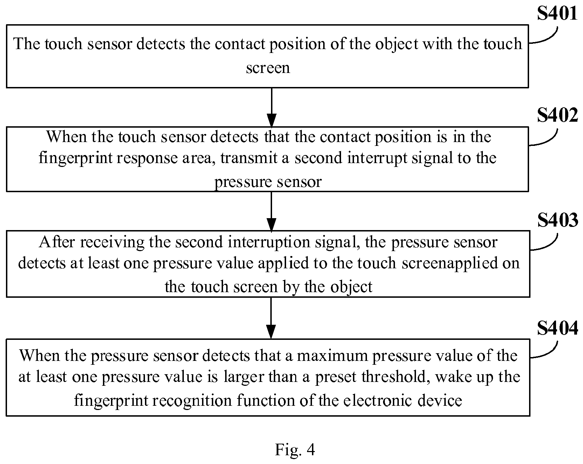

Fig. 4 is a flow chart of a method for fingerprint unlocking according to another exemplary embodiment. In the present embodiment, the touch screen includes a touch sensor for detecting a contact position of the object on the touch screen, and the electronic device further includes a pressure sensor for detecting a pressure value applied on the touch screen by the object. Based on the embodiment shown in Fig. 2, the above step S201 includes the following steps S401 to S404.

In step S401, the touch sensor detects the contact position of the object with the touch screen.

In an embodiment, before step S401, the method may further include the following steps: when it is detected that the touch screen is in a screen-off state or the electronic device is in a sleep state, the touch sensor is activated. That is, when the electronic device is in the off state or the electronic device is in the sleep state, the touch sensor may be activated firstly to detect the contact position of the object with the touch screen in real time. For example, the touch sensor continuously detects the contact position of the object with the touch screen at a preset operating frequency. To reduce the power consumption, the touch sensor may operate at a relatively low operating frequency.

In step S402, when the touch sensor detects that the contact position is in the fingerprint response area, a second interrupt signal is transmitted to the pressure sensor.

In the present embodiment, when the touch sensor detects that the above contact position is located in the fingerprint response area, the second interrupt signal is transmited to the pressure sensor, and the second interrupt signal is configured to trigger the pressure sensor to work. The time of activating the pressure sensor by the touch sensor through the hardware interrupt is generally less than the time of activating the pressure sensor to work by the operating system, in this way, the fingerprint unlocking delay can be reduced.

In step S403, after receiving the second interruption signal, the pressure sensor detects at least one pressure value applied on the touch screen by the object.

In an embodiment, the pressure sensing range of the pressure sensor may cover the fingerprint response area, rather than covering the entire touch screen. In the present embodiment, the pressure sensor may be located near the fingerprint response area, which is not limited. In another embodiment, the pressure sensing range of the pressure sensor may also cover the entire touch screen.

In an embodiment, the pressure sensor may be a separate sensor, which may be located above the glass cover in the touch screen module (the front side of the electronic device) or under the touch screen module. In an embodiment, the pressure sensor may also be integrated into the touch screen module.

In an embodiment, the touch screen may be a touch screen with a single point touch function that may detect one pressure value applied on the touch screen by the object. In another embodiment, the touch screen may be a touch screen with a multi-point touch function that may detect two or more pressure values applied on the touch screen by the object.

In step S404, when the pressure sensor detects that a maximum pressure value of the at least one pressure value is larger than the preset threshold, the fingerprint recognition function of the electronic device is woken up.

In the present embodiment, the pressure sensor may only cover the fingerprint response area for detecting the pressure value applied by the object to the fingerprint response area on the touch screen, which can reduce the cost of fingerprint unlocking.

In the present embodiment, the pressure sensor may start working, after receiving the second interrupt signal, to detect the pressure applied on the touch screen by the object, and when the pressure is detected to be larger than the preset threshold, wake up the fingerprint recognition function of the electronic device.

In the present embodiment, when the touch screen is in the off state or the electronic device is in the sleep state, the touch sensor is activated firstly to detect the contact position of the object and the touch screen, and when the contact position is detected to be located in the fingerprint response area, the second interrupt is transmitted to the pressure sensor to activate the pressure sensor to detect at least one pressure value applied on the touch screen by the object. When it is detected that the maximum pressure value of the at least one pressure value is larger than the preset threshold, the fingerprint recognition function of the electronic device is woken up. Since the time of activating the pressure sensor by the touch sensor through the hardware interrupt is generally less than the time of activating the pressure sensor to work by the operating system, the fingerprint unlocking delay can be reduced.

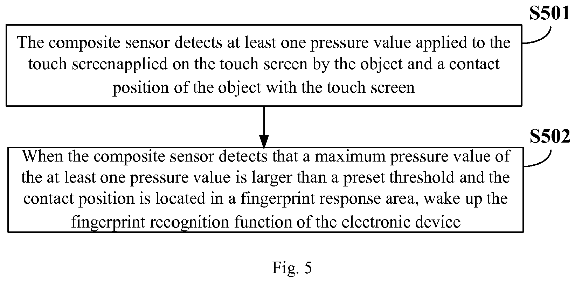

Fig. 5 is a flow chart of a method for fingerprint unlocking according to another exemplary embodiment. In the present embodiment, the electronic device further includes a composite sensor capable of simultaneously detecting the pressure value and the contact position. Based on the embodiment shown in Fig. 2, the step S201 includes the following steps S501 to S502.

In step S501, the composite sensor detects at least one pressure value applied on the touch screen by the object and a contact position of the object with the touch screen.

In step S502, when the composite sensor detects that the maximum pressure value of the at least one pressure value is larger than the preset threshold and the contact position is located in the fingerprint response area, the fingerprint recognition function of the electronic device is woken up.

In an embodiment, the composite sensor may be a device that integrates with a pressure sensor and a touch sensor. In another embodiment, the composite sensor may be a resistive touch screen, which may achieve the functions of detecting the pressure value and the contact position simultaneously.

In an embodiment, when the touch screen is in the off state or the electronic device is in the sleep state, the composite sensor may be activated to detect the at least one pressure value applied on the touch screen by the object and the contact position of the object with the touch screen in real time. For example, the composite sensor may continuously detect at least one pressure value applied on the touch screen by the object and the contact position of the object with the touch screen at a preset operating frequency. In order to reduce power consumption, the composite sensor may operate at a relatively low operating frequency.

In the present embodiment, when the composite sensor detects the maximum pressure value of the at least one pressure value applied on the touch screen by the object is larger than a preset threshold and the contact position of the object and the touch screen is located in the fingerprint response area, the fingerprint recognition of the electronic device is woken up. Since the detection of the contact position of the object on the touch screen and the detection of the pressure value applied on the touch screen by the object are performed in parallel, the fingerprint unlocking delay can be reduced.

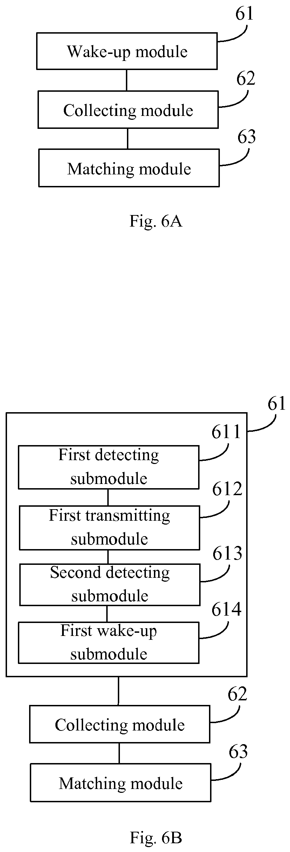

Fig. 6A is a block diagram of an apparatus for fingerprint unlocking according to an exemplary embodiment. The apparatus is applied to an electronic device. The electronic device is equipped with a touch screen and a fingerprint sensor, and capable of detecting a pressure value applied on the touch screen by the object and a contact position of the object with the touch screen. The fingerprint sensor is disposed in the touch screen and forms a fingerprint response area at a corresponding position of the touch screen. As shown in Fig. 6A, the apparatus includes: a wake-up module 61, a collecting module 62, and a matching module 63.

The wake-up module 61 is configured to, when it is detected that the pressure value is larger than the preset threshold and the contact position is located in the fingerprint response area, wake up the fingerprint recognition function of the electronic device.

The collecting module 62 is configured to collect texture information of the object by the fingerprint sensor.

The matching module 63 is configured to match the texture information with pre-stored reference fingerprint information; and when the matching is successful, perform an unlocking operation on the electronic device.

Fig. 6B is a block diagram of an apparatus for fingerprint unlocking according to an exemplary embodiment. The touch screen includes a touch sensor, and the electronic device further includes a pressure sensor. As shown in Fig. 6B, the wake-up module 61 includes: a first detecting submodule 611, a first transmitting submodule 612, a second detecting submodule 613, and a first wake-up submodule 614.

The first detecting submodule 611 is configured to detect at least one pressure value applied on the touch screen by the object with the pressure sensor.

The first transmitting submodule 612 is configured to, when the pressure sensor detects that a maximum pressure value of the at least one pressure value is larger than the preset threshold, transmit a first interrupt signal to the touch sensor.

The second detecting submodule 613 is configured to, after the touch sensor receives the first interrupt signal, detect the contact position of the object with the touch screen.

The first wake-up submodule 614 is configured to, when the touch sensor detects that the contact position is located in the fingerprint response area, wake up the fingerprint recognition function of the electronic device.

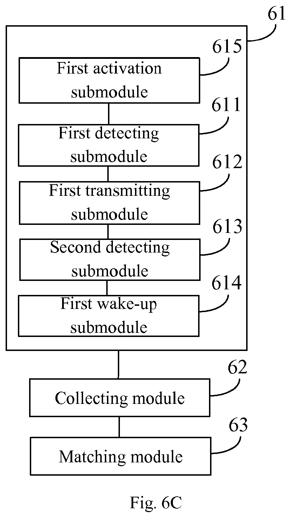

Fig. 6C is a block diagram of an apparatus for fingerprint unlocking according to an exemplary embodiment. As shown in Fig 6C, the wake-up module 61 further includes: a first activation submodule 615.

The first activation submodule 615 is configured to, when it is detected that the touch screen is in a screen-off state or the electronic device is in a sleep state, activate the pressure sensor.

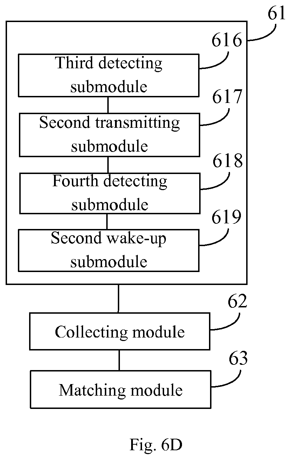

Fig. 6D is a block diagram of an apparatus for fingerprint unlocking according to an exemplary embodiment. The touch screen includes a touch sensor, and the electronic device further includes a pressure sensor. As shown in Fig. 6D, the wake-up module 61 includes: a third detecting submodule 616, a second transmitting submodule 617, a fourth detecting submodule 618, and a second wake-up submodule 619.

The third detecting submodule 616 is configured to detect the contact position of the object with the touch screen by the touch sensor.

The second transmitting submodule 617 is configured to, when the touch sensor detects that the contact position is located in the fingerprint response area, transmit a second interrupt signal to the pressure sensor.

The fourth detecting submodule 618 is configured to, after the pressure sensor receives the second interrupt signal, detect at least one pressure value applied on the touch screen by the object.

The second wake-up submodule 619 is configured to, when the pressure sensor detects that a maximum pressure value of the at least one pressure value is larger than the preset threshold, wake up the fingerprint recognition function of the electronic device.

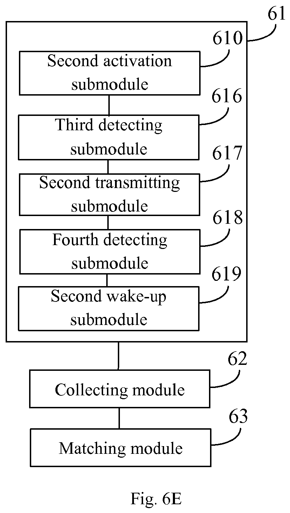

Fig. 6E is a block diagram of an apparatus for fingerprint unlocking according to an exemplary embodiment. As shown in Fig. 6E, the wake-up module 61 further includes: a second activation submodule 610.

The second activation submodule 610 is configured to, when it is detected that the touch screen is in a screen-off state or the electronic device is in a sleep state, activate the touch sensor.

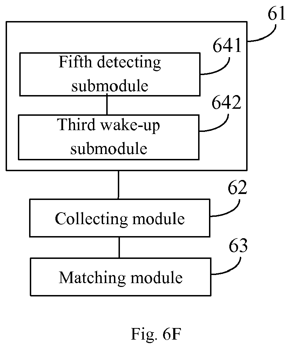

Fig. 6F is a block diagram of an apparatus for fingerprint unlocking according to an exemplary embodiment. The electronic device also includes a composite sensor capable of simultaneously detecting the pressure value and the contact position. As shown in Fig. 6F, the wake-up module 61 includes: a fifth detecting submodule 641 and a third wake-up submodule 642.

The fifth detecting submodule 641 is configured to detect, by the composite sensor, at least one pressure value applied on the touch screen by the object and the contact position of the object with the touch screen.

The third wake-up submodule 642 is configured to, when the composite sensor detects that a maximum pressure value of the at least one pressure value is larger than the preset threshold and the contact position is located in the fingerprint response area, wake up the finger recognition function of the electronic device.

With respect to the apparatuses in the above embodiments, the specific manners for performing operations of processor therein have been described in detail in the embodiments regarding the methods, which will not be repeated herein.

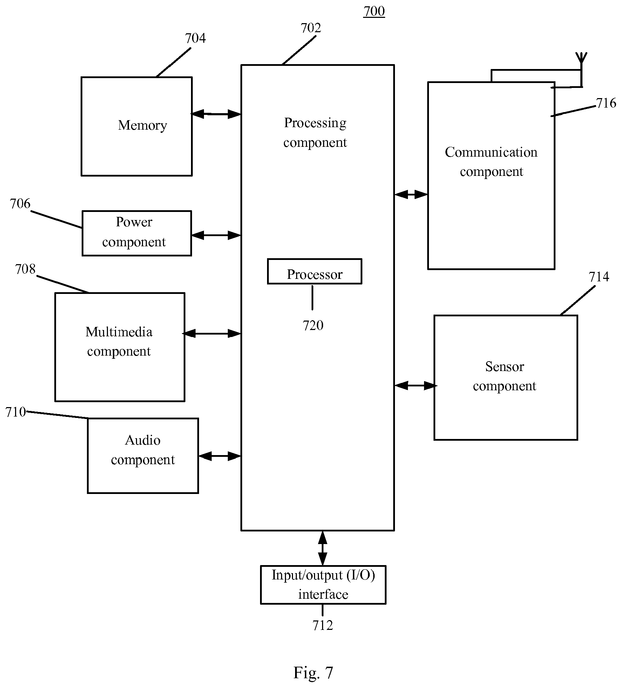

Fig. 7 is a block diagram of an apparatus 700 for fingerprint unlocking according to an exemplary embodiment. For example, the apparatus 700 may be a mobile phone, a computer, a digital broadcast terminal, a messaging apparatus, a gaming console, a tablet, a medical apparatus, exercise equipment, a personal digital assistant, and the like.

Referring to Fig. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the apparatus 700 and other apparatus. The apparatus 700 may access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the apparatus 700, for performing the above-described methods. For example, the non-transitory computer-readable storage medium may be a ROM, a RAM, a CD-ROM, a magnetic tape, a floppy disc, an optical data storage apparatus, and the like. Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

## Claims

1. A method for fingerprint unlocking, applied to an electronic device equipped with a touch screen and a fingerprint sensor, wherein the electronic device is configured to detect a pressure value applied on the touch screen by an object and a contact position of the object with the touch screen, and the fingerprint sensor is disposed in the touch screen and forms a fingerprint response area at a corresponding position of the touch screen, the method comprising:
when it is detected that the pressure value is larger than a preset threshold and the contact position is located in the fingerprint response area, waking up (S201) a fingerprint recognition function of the electronic device;
collecting (S202) texture information of the object via the fingerprint sensor; and
matching the texture information with pre-stored reference fingerprint information; and when the matching is successful, performing an unlocking operation on the electronic device (S203),
wherein the touch screen includes a touch sensor, and the electronic device further includes a pressure sensor, and **characterized by**:
the waking up (S201) the fingerprint recognition function of the electronic device when it is detected that the pressure value is larger than the preset threshold and the contact position is located in the fingerprint response area comprising:
detecting (S301), via the pressure sensor, at least one pressure value applied on the touch screen by the object;
when the pressure sensor detects that a maximum pressure value of the at least one pressure value is larger than the preset threshold, transmitting (S302) a first hardware interrupt signal to the touch sensor;
after receiving the first hardware interrupt signal, detecting (S303), via the touch sensor, the contact position of the object with the touch screen; and
when the touch sensor detects that the contact position is located in the fingerprint response area, waking up (S304) the fingerprint recognition function of the electronic device;
or,
the waking up (S201) the fingerprint recognition function of the electronic device when it is detected that the pressure value is larger than the preset threshold and the contact position is located in the fingerprint response area comprising:
detecting (S401), via the touch sensor, the contact position of the object with the touch screen;
when the touch sensor detects that the contact position is in the fingerprint response area, transmitting (S402) a second hardware interrupt signal to the pressure sensor;
after receiving the second hardware interruption signal, detecting (S403), via the pressure sensor, at least one pressure value applied on the touch screen by the object; and
when the pressure sensor detects that a maximum pressure value of the at least one pressure value is larger than the preset threshold, waking up (S404) the fingerprint recognition function of the electronic device.

2. The method according to claim 1, wherein before detecting (S301), via the pressure sensor, the at least one pressure value applied on the touch screen by the object, the method further comprises:
when it is detected that the touch screen is in a screen-off state or the electronic device is in a sleep state, activating the pressure sensor.

3. The method according to claim 1, wherein before detecting (S401), via the touch sensor, the contact position of the object with the touch screen, the method further comprises:
when it is detected that the touch screen is in a screen-off state or the electronic device is in a sleep state, activating the touch sensor.

4. An electronic device, comprising:
a processor (720);
a memory (704) for storing instructions executable by the processor (720); and
a touch screen (12) and a fingerprint sensor,
wherein the electronic device (11) is configured to detect a pressure value applied on the touch screen (12) by an object and a contact position of the object with the touch screen (12), and the fingerprint sensor is disposed in the touch screen (12) and forming a fingerprint response area at a corresponding position of the touch screen (12); and
wherein the processor (720) is configured to:
when it is detected that the pressure value is larger than a preset threshold and the contact position is located in the fingerprint response area, wake up (S201) a fingerprint recognition function of the electronic device (11);
collect (S202) texture information of the object via the fingerprint sensor; and
match (S203) the texture information with pre-stored reference fingerprint information;
and when the matching is successful, perform an unlocking operation on the electronic device (11),
wherein the touch screen (12) comprises a touch sensor, the electronic device (11) further comprises a pressure sensor, and **characterized in that**:
the processor (720) is further configured to:
detect at least one pressure value applied on the touch screen (12) by the object with the pressure sensor;
when the pressure sensor detects that a maximum pressure value of the at least one pressure value is larger than the preset threshold, transmit a first hardware interrupt signal to the touch sensor;
after the touch sensor receives the first hardware interrupt signal, detect the contact position of the object with the touch screen; and
when the touch sensor detects that the contact position is located in the fingerprint response area, wake up the fingerprint recognition function of the electronic device (11),
or,
the processor (720) is further configured to:
detect the contact position of the object with the touch screen (12) by the touch sensor;
when the touch sensor detects that the contact position is located in the fingerprint response area, transmit a second hardware interrupt signal to the pressure sensor;
after the pressure sensor receives the second hardware interrupt signal, detect at least one pressure value applied on the touch screen (12) by the object; and
when the pressure sensor detects that a maximum pressure value of the at least one pressure value is larger than the preset threshold, wake up the fingerprint recognition function of the electronic device (11).

5. The electronic device according to claim 4, wherein the processor (720) is further configured to:
when it is detected that the touch screen (12) is in a screen-off state or the electronic device (11) is in a sleep state, activate the pressure sensor.

6. The electronic device according to claim 4, wherein the processor (720) is further configured to:
when it is detected that the touch screen (12) is in a screen-off state or the electronic device (11) is in a sleep state, activate the touch sensor.

7. A computer-readable storage medium storing instructions, for use in an electronic device (11) equipped with a touch screen (12) and a fingerprint sensor, wherein the electronic device (11) is configured to detect a pressure value applied on the touch screen (12) by an object and a contact position of the object with the touch screen, and the fingerprint sensor is disposed in the touch screen (12) and forms a fingerprint response area at a corresponding position of the touch screen, and wherein the instructions are executed by a processor of the electronic device (11) to cause the electronic device (11) to perform a method for fingerprint unlocking according to any one of claims 1-3.

## Patentansprüche

1. Verfahren zum Fingerabdruckentsperren, das auf eine elektronische Vorrichtung angewandt wird, die mit einem Berührungsbildschirm und einem Fingerabdrucksensor ausgerüstet ist, wobei die elektronische Vorrichtung konfiguriert ist, um einen Druckwert, der auf dem Berührungsbildschirm von einem Objekt angelegt wird, und eine Kontaktposition des Objekts mit dem Berührungsbildschirm zu erfassen, und der Fingerabdrucksensor in dem Berührungsbildschirm angeordnet ist, und eine Fingerabdruckreaktionsfläche an einer entsprechenden Position des Berührungsbildschirms bildet, wobei das Verfahren umfasst:
wenn erfasst wird, dass der Druckwert größer ist als ein voreingestellter Schwellenwert und die Kontaktposition in der Fingerabdruckreaktionsfläche liegt, Wecken (S201) einer Fingerabdruckerkennungsfunktion der elektronischen Vorrichtung;
Sammeln (S202) von Texturinformationen des Objekts über den Fingerabdrucksensor; und
Vergleichen der Texturinformationen mit vorab gespeicherten Referenzfingerdruckinformationen; und, wenn das Vergleichen erfolgreich ist, Ausführen eines Entsperrungsvorgangs auf der elektronischen Vorrichtung (S203),
wobei der Berührungsbildschirm einen Berührungssensor beinhaltet, und die elektronische Vorrichtung weiter einen Drucksensor beinhaltet, und **dadurch gekennzeichnet, dass**:
das Wecken (S201) der Fingerabdruckerkennungsfunktion der elektronischen Vorrichtung, wenn erfasst wird, dass der Druckwert größer ist als der voreingestellte Schwellenwert und die Kontaktposition in der Fingerabdruckreaktionsfläche liegt, umfasst:
Erfassen (S301), über den Drucksensor, mindestens eines Druckwertes, der auf dem Berührungsbildschirm von dem Objekt angelegt wird;
wenn der Drucksensor erfasst, dass ein maximaler Druckwert des mindestens einen Druckwertes größer ist als der voreingestellte Schwellenwert, Übertragen (S302) eines ersten Hardware-Unterbrechungssignals zu dem Berührungssensor;
nach Empfangen des ersten Hardware-Unterbrechungssignals, Erfassen (S303), über den Berührungssensor, der Kontaktposition des Objekts mit dem Berührungsbildschirm; und
wenn der Berührungssensor erfasst, dass die Kontaktposition in der Fingerabdruckreaktionsfläche liegt, Wecken (S304) der Fingerabdruckerkennungsfunktion der elektronischen Vorrichtung;
oder,
das Wecken (S201) der Fingerabdruckerkennungsfunktion der elektronischen Vorrichtung, wenn erfasst wird, dass der Druckwert größer ist als der voreingestellte Schwellenwert und die Kontaktposition in der Fingerabdruckreaktionsfläche liegt, umfasst:
Erfassen (S401), über den Berührungssensor, der Kontaktposition des Objekts mit dem Berührungsbildschirm;
wenn der Berührungssensor erfasst, dass die Kontaktposition in der Fingerabdruckreaktionsfläche ist, Übertragen (S402) eines zweiten Hardware-Unterbrechungssignals zu dem Drucksensor;
nach Empfangen des zweiten Hardware-Unterbrechungssignals, Erfassen (S403), über den Drucksensor, mindestens eines Druckwertes, der auf dem Berührungsbildschirm von dem Objekt angelegt wird; und
wenn der Drucksensor erfasst, dass ein maximaler Druckwert des mindestens einen Druckwertes größer ist als der voreingestellte Schwellenwert, Wecken (S404) der Fingerabdruckerkennungsfunktion der elektronischen Vorrichtung.

2. Verfahren nach Anspruch 1, wobei vor Erfassen (S301), über den Drucksensor, des mindestens einen Druckwertes, der auf den Berührungsbildschirm von dem Objekt angelegt wird, das Verfahren weiter umfasst:
wenn erfasst wird, dass der Berührungsbildschirm in einem Bildschirm-Aus-Zustand ist oder die elektronische Vorrichtung in einem Schlafzustand ist, Aktivieren des Drucksensors.

3. Verfahren nach Anspruch 1, wobei vor Erfassen (S401), über den Berührungssensor, der Kontaktposition des Objekts mit dem Berührungsbildschirm, das Verfahren weiter umfasst:
wenn erfasst wird, dass der Berührungsbildschirm in einem Bildschirm-Aus-Zustand ist oder die elektronische Vorrichtung in einem Schlafzustand ist, Aktivieren des Berührungssensors.

4. Elektronische Vorrichtung, die umfasst:
einen Prozessor (720);
einen Speicher (704) zum Speichern von Anweisungen, die von dem Prozessor (720) ausführbar sind; und
einen Berührungsbildschirm (12) und einen Fingerabdrucksensor,
wobei die elektronische Vorrichtung (11) konfiguriert ist, um einen Druckwert, der auf den Berührungsbildschirm (12) von einem Objekt angelegt wird, und eine Kontaktposition des Objekts mit dem Berührungsbildschirm (12) zu erfassen, und der Fingerabdrucksensor in dem Berührungsbildschirm (12) angeordnet ist und eine Fingerabdruckreaktionsfläche an einer entsprechenden Position des Berührungsbildschirms (12) bildet; und
wobei der Prozessor (720) konfiguriert ist, um:
wenn erfasst wird, dass der Druckwert größer ist als ein voreingestellter Schwellenwert und die Kontaktposition in der Fingerabdruckreaktionsfläche liegt, Wecken (S201) einer Fingerabdruckerkennungsfunktion der elektronischen Vorrichtung (11);
Sammeln (S202) von Texturinformationen des Objekts über den Fingerabdrucksensor; und
Vergleichen (S203) der Texturinformationen mit vorab gespeicherten Referenzfingerdruckinformationen; und, wenn das Vergleichen erfolgreich ist, Ausführen eines Entsperrungsvorgangs auf der elektronischen Vorrichtung (11),
wobei der Berührungsbildschirm (12) einen Berührungssensor umfasst, die elektronische Vorrichtung (11) weiter einen Drucksensor umfasst, und **dadurch gekennzeichnet, dass**:
der Prozessor (720) weiter konfiguriert ist, um:
mindestens einen Druckwert, der auf den Berührungsbildschirm (12) von dem Objekt angelegt wird, mit dem Drucksensor zu erfassen;
wenn der Drucksensor erfasst, dass ein maximaler Druckwert des mindestens einen Druckwertes größer ist als der voreingestellte Schwellenwert, ein erstes Hardware-Unterbrechungssignal zu dem Berührungssensor zu übertragen;
nachdem der Berührungssensor das erste Hardware-Unterbrechungssignal empfangen hat, die Kontaktposition des Objekts mit dem Berührungsbildschirm zu erfassen; und
wenn der Berührungssensor erfasst, dass die Kontaktposition in der Fingerabdruckreaktionsfläche liegt, die Fingerabdruckerkennungsfunktion der elektronischen Vorrichtung (11) zu wecken,
oder
der Prozessor (720) weiter konfiguriert ist, um:
die Kontaktposition des Objekts mit dem Berührungsbildschirm (12) durch den Berührungssensor zu erfassen;
wenn der Berührungssensor erfasst, dass die Kontaktposition in der Fingerabdruckreaktionsfläche liegt, ein zweites Hardware-Unterbrechungssignal zu dem Drucksensor zu übertragen;
nachdem der Drucksensor das zweite Hardware-Unterbrechungssignal empfangen hat, mindestens einen Druckwert, der auf den Berührungsbildschirm (12) von dem Objekt angelegt wird, zu erfassen; und,
wenn der Drucksensor erfasst, dass ein maximaler Druckwert des mindestens einen Druckwertes größer ist als der voreingestellte Schwellenwert, die Fingerabdruckerkennungsfunktion der elektronischen Vorrichtung (11) zu wecken.

5. Elektronische Vorrichtung nach Anspruch 4, wobei der Prozessor (720) weiter dazu konfiguriert ist, um:
wenn erfasst wird, dass der Berührungsbildschirm (12) in einem Bildschirm-Aus-Zustand ist oder die elektronische Vorrichtung (11) in einem Schlafzustand ist, den Drucksensor zu aktivieren.

6. Elektronische Vorrichtung nach Anspruch 4, wobei der Prozessor (720) weiter dazu konfiguriert ist, um:
wenn erfasst wird, dass der Berührungsbildschirm (12) in einem Bildschirm-Aus-Zustand ist oder die elektronische Vorrichtung (11) in einem Schlafzustand ist, den Berührungssensor zu aktivieren.

7. Computerlesbares Speichermedium, das Anweisungen zur Verwendung in einer elektronischen Vorrichtung (11) speichert, die mit einem Berührungsbildschirm (12) und einem Fingerabdrucksensor ausgerüstet ist, wobei die elektronische Vorrichtung (11) konfiguriert ist, um einen Druckwert, der auf dem Berührungsbildschirm (12) von einem Objekt angelegt wird, und eine Kontaktposition des Objekts mit dem Berührungsbildschirm zu erfassen, und der Fingerabdrucksensor in dem Berührungsbildschirm (12) angeordnet ist und eine Fingerabdruckreaktionsfläche an einer entsprechenden Position des Berührungsbildschirms bildet, und wobei die Anweisungen von einem Prozessor der elektronischen Vorrichtung (11) ausgeführt werden, um die elektronische Vorrichtung (11) zu veranlassen, ein Verfahren zur Fingerabdruckentsperrung nach einem der Ansprüche 1 bis 3 auszuführen.

## Revendications

1. Procédé pour un déverrouillage par empreinte digitale, appliqué à un dispositif électronique équipé d'un écran tactile et d'un capteur d'empreinte digitale, dans lequel le dispositif électronique est configuré pour détecter une valeur de pression appliquée sur l'écran tactile par un objet et une position de contact de l'objet avec l'écran tactile, et le capteur d'empreinte digitale est disposé dans l'écran tactile et forme une zone de réponse par empreinte digitale au niveau d'une position correspondante de l'écran tactile, le procédé comprenant :
lorsqu'il est détecté que la valeur de pression est plus grande qu'un seuil prédéfini et que la position de contact est située dans la zone de réponse par empreinte digitale, un réveil (S201) d'une fonction de reconnaissance d'empreinte digitale du dispositif électronique ;
une collecte (S202) d'informations de texture de l'objet via le capteur d'empreinte digitale ; et
une mise en correspondance des informations de texture avec des informations d'empreinte digitale de référence stockées préalablement; et lorsque la mise en correspondance est concluante, une réalisation d'une opération de déverrouillage sur le dispositif électronique (S203),
dans lequel l'écran tactile inclut un capteur tactile, et le dispositif électronique inclut en outre un capteur de pression, et **caractérisé par** :
le réveil (S201) de la fonction de reconnaissance d'empreinte digitale du dispositif électronique, lorsqu'il est détecté que la valeur de pression est plus grande que le seuil prédéfini et que la position de contact est située dans la zone de réponse par empreinte digitale, comprenant :
une détection (S301), via le capteur de pression, d'au moins une valeur de pression appliquée sur l'écran tactile par l'objet ;
lorsque le capteur de pression détecte qu'une valeur de pression maximale de la au moins une valeur de pression est plus grande que le seuil prédéfini, une transmission (S302) d'un premier signal d'interruption de matériel au capteur tactile ;
après une réception du premier signal d'interruption de matériel, une détection (S303), via le capteur tactile, de la position de contact de l'objet avec l'écran tactile ; et
lorsque le capteur tactile détecte que la position de contact est située dans la zone de réponse par empreinte digitale, un réveil (S304) de la fonction de reconnaissance d'empreinte digitale du dispositif électronique ;
ou
le réveil (S201) de la fonction de reconnaissance d'empreinte digitale du dispositif électronique, lorsqu'il est détecté que la valeur de pression est plus grande que le seuil prédéfini et que la position de contact est située dans la zone de réponse par empreinte digitale, comprenant :
une détection (S401), via le capteur tactile, de la position de contact de l'objet avec l'écran tactile ;
lorsque le capteur tactile détecte que la position de contact est dans la zone de réponse par empreinte digitale, une transmission (S402) d'un second signal d'interruption de matériel au capteur de pression ;
après une réception du second signal d'interruption de matériel, une détection (S403), via le capteur de pression, d'au moins une valeur de pression appliquée sur l'écran tactile par l'objet ; et
lorsque le capteur de pression détecte qu'une valeur de pression maximale de la au moins une valeur de pression est plus grande que le seuil prédéfini, un réveil (S404) de la fonction de reconnaissance d'empreinte digitale du dispositif électronique.

2. Procédé selon la revendication 1, dans lequel avant la détection (S301), via le capteur de pression, de la au moins une valeur de pression appliquée sur l'écran tactile par l'objet, le procédé comprend en outre :
lorsqu'il est détecté que l'écran tactile est dans un état d'écran désactivé ou que le dispositif électronique est dans un état de veille, une activation du capteur de pression.

3. Procédé selon la revendication 1, dans lequel avant la détection (S401), via le capteur tactile, de la position de contact de l'objet avec l'écran tactile, le procédé comprend en outre :
lorsqu'il est détecté que l'écran tactile est dans un état d'écran désactivé ou que le dispositif électronique est dans un état de veille, une activation du capteur de pression.

4. Dispositif électronique, comprenant :
un processeur (720) ;
une mémoire (704) pour stocker des instructions exécutables par le processeur (720) ; et
un écran tactile (12) et un capteur d'empreinte digitale,
dans lequel le dispositif électronique (11) est configuré pour détecter une valeur de pression appliquée sur l'écran tactile (12) par un objet et une position de contact de l'objet avec l'écran tactile (12), et le capteur d'empreinte digitale est disposé dans l'écran tactile (12) et forme une zone de réponse par empreinte digitale au niveau d'une position correspondante de l'écran tactile (12) ; et
dans lequel le processeur (720) est configuré pour :
lorsqu'il est détecté que la valeur de pression est plus grande qu'un seuil prédéfini et que la position de contact est située dans la zone de réponse par empreinte digitale, réveiller (S201) une fonction de reconnaissance d'empreinte digitale du dispositif électronique (11) ;
collecter (S202) des informations de texture de l'objet via le capteur d'empreinte digitale ; et
mettre en correspondance (S203) les informations de texture avec des informations d'empreinte digitale de référence stockées préalablement; et lorsque la mise en correspondance est concluante, réaliser une opération de déverrouillage sur le dispositif électronique (11),
dans lequel l'écran tactile (12) comprend un capteur tactile, le dispositif électronique (11) comprend en outre un capteur de pression, et **caractérisé en ce que** :
le processeur (720) est en outre configuré pour :
détecter au moins une valeur de pression appliquée sur l'écran tactile (12) par l'objet avec le capteur de pression ;
lorsque le capteur de pression détecte qu'une valeur de pression maximale de la au moins une valeur de pression est plus grande que le seuil prédéfini, transmettre un premier signal d'interruption de matériel au capteur tactile ;
après que le capteur tactile a reçu le premier signal d'interruption de matériel, détecter la position de contact avec l'écran tactile ; et
lorsque le capteur tactile détecte que la position de contact est située dans la zone de réponse par empreinte digitale, réveiller la fonction de reconnaissance d'empreinte digitale du dispositif électronique (11), ou
le processeur (720) est en outre configuré pour :
détecter la position de contact de l'objet avec l'écran tactile (12) par le capteur tactile ;
lorsque le capteur tactile détecte que la position de contact est située dans la zone de réponse par empreinte digitale, transmettre un second signal d'interruption de matériel au capteur de pression ;
après que le capteur de pression a reçu le second signal d'interruption de matériel, détecter au moins une valeur de pression appliquée sur l'écran tactile (12) par l'objet ; et
lorsque le capteur de pression détecte qu'une valeur de pression maximale de la au moins une valeur de pression est plus grande que le seuil prédéfini, réveiller la fonction de reconnaissance d'empreinte digitale du dispositif électronique (11).

5. Dispositif électronique selon la revendication 4, dans lequel le processeur (720) est en outre configuré pour :
lorsqu'il est détecté que l'écran tactile (12) est dans un état d'écran désactivé ou que le dispositif électronique (11) est dans un état de veille, activer le capteur de pression.

6. Dispositif électronique selon la revendication 4, dans lequel le processeur (720) est en outre configuré pour :
lorsqu'il est détecté que l'écran tactile (12) est dans un état d'écran désactivé ou que le dispositif électronique (11) est dans un état de veille, activer le capteur tactile.

7. Support de stockage lisible par ordinateur stockant des instructions, destiné à être utilisé dans un dispositif électronique (11) équipé d'un écran tactile (12) et d'un capteur d'empreinte digitale, dans lequel le dispositif électronique (11) est configuré pour détecter une valeur de pression appliquée sur l'écran tactile (12) par un objet et une position de contact de l'objet avec l'écran tactile, et le capteur d'empreinte digitale est disposé dans l'écran tactile (12) et forme une zone de réponse par empreinte digitale au niveau d'une position correspondante de l'écran tactile, et dans lequel les instructions sont exécutées par un processeur du dispositif électronique (11) pour amener le dispositif électronique (11) à réaliser un procédé pour un déverrouillage par empreinte digitale selon l'une quelconque des revendications 1 à 3.
